# EUROPEAN PATENT APPLICATION

(11) **EP 1 078 570 A1**
(43) Date of publication of application: **28.02.2001**
(21) Application number: 00202944.5
(22) Date of filing: 21.08.2000
(51) Int. Cl.: A01K 1/06, A01K 15/02, A01K 1/12

(54) **Apparatus for restraining animals from lying down**

(30) Priority: 20.08.1999 NL 1012873; 01.05.2000 EP 00201570
(71) Applicant: N.V. Nederlandsche Apparatenfabriek NEDAP, 7141 DC Groenlo (NL)
(72) Inventor: Roosenschoon, Pieter Lieuwe, 7104 AC Groenlo (NL)
(74) Representative: Prins, Adrianus Willem

(57) **Abstract**

The invention relates to an apparatus for dairy farming with which milk-giving animals such as, for instance, cows are prevented from lying down too quickly after milking, with the purpose of having the animals stand or fixing them until the openings of the teats of these animals after milking have had sufficient time to close so that the penetration of bacteria is prevented. This apparatus can be used to prevent animals after milking from leaving a space with restriction to lying down or in conjunction with feeding places provided with unlockable feeding fences each individually or in combination jointly provided with an identification system and an unlocking mechanism. It is also possible to realize the system without identification system but with a time clock and switch mechanism in combination with an unlocking mechanism.

## Description

The invention relates to an apparatus with which milk-giving animals such as, for instance, cows are prevented from lying down too quickly after milking, with the purpose of having the animals stand or fixing them until the openings of the teats of the animals after milking have had sufficient time to close so that the penetration of bacteria is prevented.

In dairy farming it is known that the opening of a teat is the most important barrier to the penetration of bacteria which cause mastitis. Cattle farmers are advised that in conventional sheds they should cause the animals after milking to stand fixed to the feeding fence, as a result of which the teat openings have sufficient time to close again. However, many cattle farmers making use of conventional milking sheds, after the last cow has been milked, generally release by hand all the animals, with the result that the cows milked last are not restrained or only restrained for a few minutes from the possibility of lying down.

Through the introduction of the milking robot by which the animals are milked for the whole twenty-four hours' period it is impossible for the cattle farmer to regularly release again by hand animals which have fixed themselves by means of the known per se feeding fences. The present invention provides a solution to this. Besides, the invention can also be used in a specific design for monitoring the feed behavior of the animals, in relation to the feed intake, health and well-being.

The apparatus according to the invention has several embodiments, in a first of which use is made of a self-closing feeding fence provided with a radio-frequency (RF) identification system with antenna and an unlocking mechanism to be controlled by means of electronics.

Self-closing or animal-operated feeding fences or fixing apparatuses are known in different embodiments and sold worldwide by different firms. Furthermore, an RF identification apparatus such as, for instance, the RF identification apparatus according to applicants' Dutch patent No. 176404 have been known for years and are used, inter alia, for identification of animals provided with an identification label in concentrates stations, milking sheds, milking robots etc. By using such a system, the unique identification code of the animal is wirelessly transmitted to a reading apparatus arranged in a place where the animal regularly passes or resides.

Via the reading apparatus mounted on or at the self-closing feeding fence the identification number of each individual animal can be passed to a farm management computer. This farm management computer knows exactly whether and, if so, when an animal was milked for the last time. The farm management computer, after a time interval adjusted by the cattle farmer has elapsed, calculated from the moment of milking, can unlock the feeding fence per animal individually or pass the moment at which this is allowed to occur on to the control system of the lockable feeding fence. The animal itself can then determine whether it wishes to leave the feeding fence, for instance in order to lie down in a lying box or another space intended therefor.

Animals reporting at the feeding fence but which have not been milked recently are not fixed, but for them the unlocking mechanism immediately becomes operative so that the animal can leave when it wishes to do so. On the other hand, it is possible in this situation to record how often the animal voluntarily pays a visit to the feeding fence and how long the different visits have lasted. This information is, as described in applicants' Dutch patent No. 624313, related with fertility, health, feed intake, etc. Different publications show that animals having metabolic diseases such as, for instance, ketosis or rennet stomach distortion show a deviating pattern and/or duration of visits to the feeding fence. Besides, it is increasingly recognized that the feed frequency, but certainly the feed time, gives much information about the well-being and the total health of the animal.

Moreover, by means of the above-described apparatus it is possible that animals which require further attention from the cattle farmer are not automatically released but only after the cattle farmer has indicated this by hand. Furthermore, the system may be arranged such that animals previously indicated in the farm management computer, which animals voluntarily report at the feeding fence, remain locked for further examination.

The advantage of such a system is that a separate treatment or separation space becomes superfluous. To prevent the possibility that the system restrains animals in their lying possibility for an unduly long time, a maximum locking time may be adjusted in the farm management computer.

Another embodiment of the apparatus according to the invention consists of a space situated behind the milking shed or milking robot, which can only be left via one or more fences to be automatically unlocked, which fences are provided with an RF identification system. This space is, for instance, provided with a slatted floor which makes it unattractive for an animal to lie down.

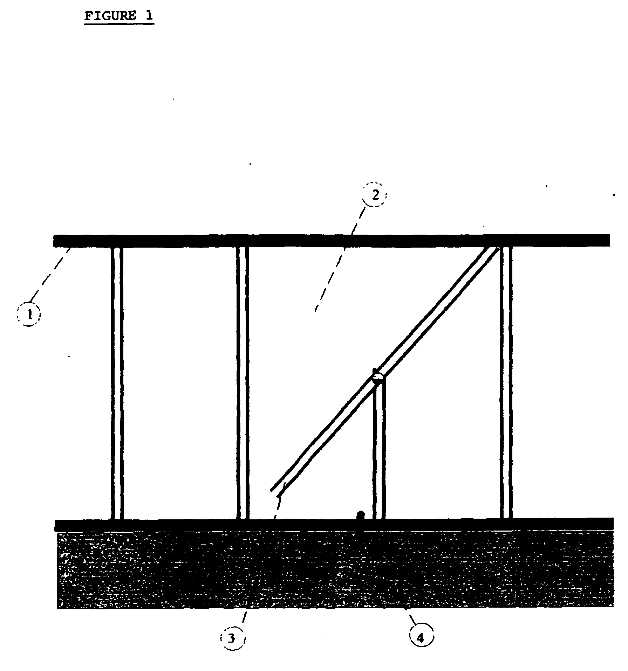

With reference to Figures 1 through 3, the present invention will be described, and, furthermore, special details considered to form part of the invention will be discussed.

Figure 1 shows a conventional embodiment of a self-closing feeding fence (1) with a head passage opening (2). When an animal passes its head through this space and moves it down, the lever (3) is brought into a vertical position and locked by means of a locking catch (4). In existing systems a complete row of locked animals can be unlocked by hand at one time. Moreover, it is possible in such systems to unlock each animal individually by hand, which, however, is rather laborious.

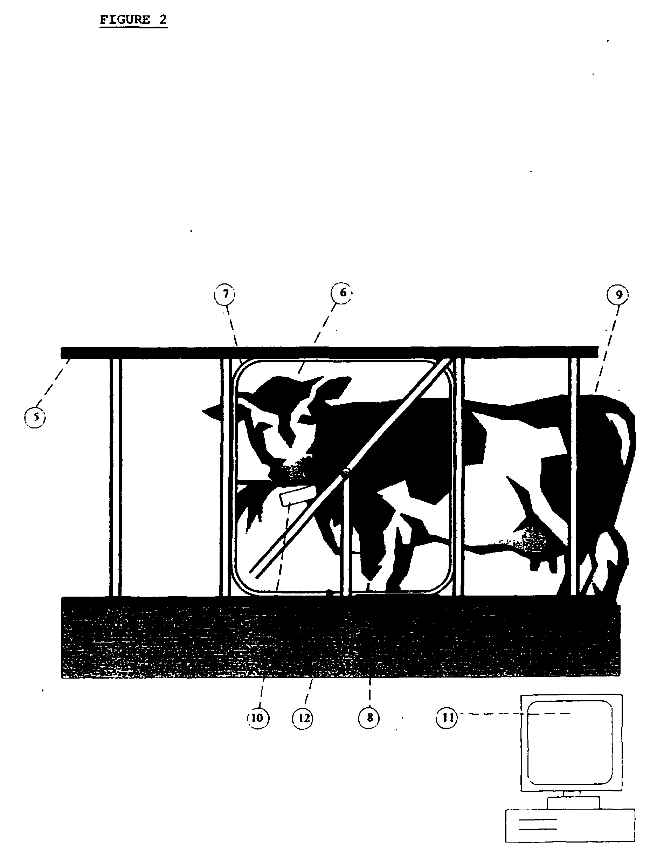

Figure 2 shows a self-closing feeding fence (5), in which an antenna (7) is arranged near or around the head passage opening (6), which antenna is connected to an RF transmitter/receiver or identification system (8). This identification system identifies the identification label (10) attached to the animal (9) and passes this information on to the farm management computer (11).

Depending on information available in the farm management computer, such as, for instance, the moment of leaving the milking shed or milking robot, it is determined how long the fence has to remain locked. This information is returned to the transmitter/receiver which, in turn, depending on the information from the management computer, activates an unlocking mechanism (12) at the right moment. In this manner the cow can, if desired, leave the feeding fence and go to a lying place only after the adjusted locking time has elapsed.

Figure 2 shows an antenna arranged per standing place. Moreover, an embodiment is possible in which use is made of a device moving along the feeding fences, to which device an antenna is attached with an RF transmitter/receiver connected therewith which, per feeding place, passes on to the farm management computer whether an animal stands and, if so, which animal is involved.

When an animal reporting at the feeding fence has not been milked recently, the unlocking mechanism is unlocked again immediately after the animal has been fixed or identified.

The unlocking mechanism may be designed in different manners, for instance by using a drawing magnet which can be activated or deactivated by means of a relay to be operated by the transmitter/receiver. As a result of activation the pin of the drawing magnet will be drawn inwards and thus unlock the fence. Of course, the drawing magnet may also be mounted such that as a result of the excitation of the relay the pin of the drawing magnet moves outwards, thereby unlocking the fence. The latter is also referred to as inverse control.

Furthermore, the unlocking mechanism may be arranged on the device moving along the feeding fences, in which case this unlocking mechanism operates a mechanical unlocking catch which ensures for each feeding fence that the fence remains closed once it has been locked by a cow.

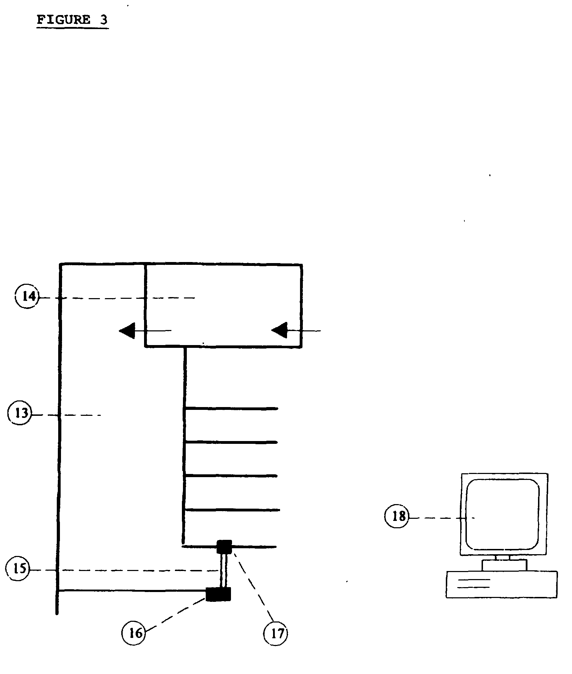

Another embodiment of the apparatus according to the invention is shown in Figure 3. This embodiment consists of a space (13) situated behind the milking shed or milking robot (14), which space can only be left via one or more fences (15) to be automatically unlocked, which fences are provided with an RF identification system (16). The space (13) is not provided with lying boxes or other provisions which make it attractive for an animal to lie down, or has, for instance, a slatted floor on which the animals are reluctant to lie down.

Although not necessary, this space may be provided with the possibility for the animals to take in roughage, concentrates and water. The unlocking mechanism (17) of the fences (15) is controlled by the electronics of the RF identification system (16).

The identification system (16) identifies the identification label attached to the animal in a known manner, such as, for instance, described in applicants' Dutch patent No. 176404 and passes this information on to the farm management computer (18). Depending on information available in the farm management computer (18) such as, inter alia, the moment of leaving the milking shed or milking robot or a necessary posttreatment, it is determined how long the fence has to remain locked. This information is returned automatically, or at the request of the identification system (16), from the farm management computer (18) to the identification system (16) which, depending on the information received, activates or does not activate the unlocking mechanism (17). This has the result that the cow can, if desired, leave the space and go to a lying place or another place at the farm only after the adjusted locking time has elapsed.

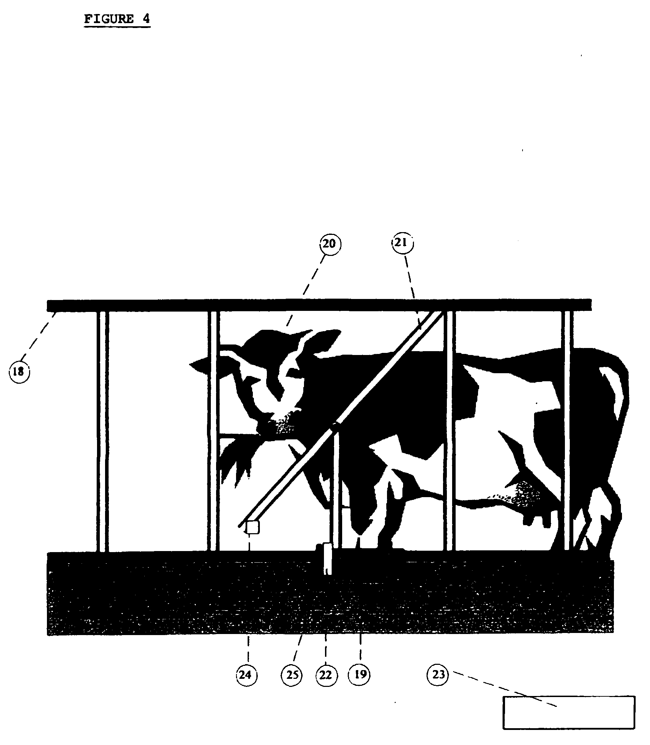

A last embodiment of the apparatus according to the invention is shown in Figure 4. This embodiment, like the first embodiment, is built up from a self-closing feeding fence (18), as also shown in Figure 1, having attached thereto a so-called electronic feeding fence automatic (19) (in abbreviation: EFA). This embodiment does not possess an identification system. The system operates as follows: As soon as a cow after milking passes its head through the head passage opening (20), a rod (21) of the self-closing feeding fence moves from the open position to the closed position. In the locking position a (reed) switch (22) arranged in the EFA (19) is operated by means of the rod (21) optionally having a magnet (24) attached thereto, as a result of which the locking mechanism (25) in the EFA is electronically brought into the position "locked", thus preventing the animal from leaving the feeding fence or lying down. The electronic or mechanical switch in the EFA operates according to the time clock mechanism. This means that the locking mechanism (25) is automatically unlocked again, and the animal can freely move again, after a pre-adjusted time of, for instance, 45 minutes has elapsed. In principle, several EFA's are connected to one power box (23) which provides the different parts of the system with voltage. It is thus possible to make all the EFA's dead by switching off the power, as a result of which all the connected EFA locking mechanisms (= fences) are unlocked centrally. Besides, each EFA is provided with one or more keys with which a number of things can be adjusted. Examples of adjustment are, inter alia, switching off the locking mechanism per EFA/feeding place, adjusting the locking time per EFA/feeding place. Furthermore, the EFA may be provided with a display on which a number of status data of the system is shown, such as, inter alia, the time which still has to elapse, after which the cow is released. The system described therefore ensures that, on condition that it is provided with the necessary voltage, each animal is fixed for the time adjusted in the EFA and is released again individually after the time adjusted for its place has elapsed.

## Claims

1. An apparatus for dairy farming, characterized in that by means of this apparatus milk-giving animals such as, for instance, cows are prevented from lying down too quickly after milking, with the purpose of having the animals stand or fixing them until the openings of the teats of these animals after milking have had sufficient time to close so that the penetration of bacteria is prevented.

2. An apparatus for dairy farming according to the preceding claim, characterized in that use is made of a space situated behind the milking shed or milking robot where feeding places are located which are each equipped with a self-closing feeding fence, an RF identification system with antenna and an unlocking mechanism to be automatically controlled by means of electronics, which unlocking mechanism ensures that the self-closing feeding fence is unlocked at a pre-adjusted time interval, calculated from the moment of milking the relevant animal.

3. An apparatus for dairy farming according to claim 1, characterized in that use is made of a space situated behind the milking shed or milking robot, which space can only be left via one or more fences to be automatically unlocked, each provided with an RF identification system with antenna and an unlocking mechanism to be automatically controlled by means of electronics, which unlocking mechanism ensures that the fence is unlocked at a pre-adjusted time interval, calculated from the moment of milking the relevant animal.

4. An apparatus for dairy farming according to one or several preceding claim(s), characterized in that the unlocking mechanism is activated or not activated on the basis of information obtained via a coupling with, for instance, a farm management computer, a milking robot or an RF identification system at the exit of the milking shed, with which on the basis of the identification number of the animal the moment of milking or the moment at which the relevant animal can be exempted from the restriction to lying down is passed on.

5. An apparatus for dairy farming according to one or several preceding claim(s), characterized in that when using activatable feeding fences an identification system with antenna is not arranged at each feeding fence, but that use is made of a device moving along these feeding fences, which device is provided with an antenna and an RF identification system connected therewith, with which subsequently per feeding place the identity of an animal present therein is determined, and with which the unlocking moment applicable to this animal is passed on to the electronic control of the unlocking mechanism of the relevant feeding fence.

6. An apparatus for dairy farming according to claim 5, characterized in that the device moving along the feeding fences is also provided with an electronically controllable mechanism with which the mechanical locking catches of the individual self-closing feeding fences can be operated such that the relevant feeding fences are unlocked.

7. An apparatus for dairy farming according to one or several preceding claim(s), characterized in that the restriction to lying down for animals which require further attention from the cattle farmer, and which are designated as such in, for instance, the farm management computer, is not automatically removed after the time interval applicable to this restriction to lying down has elapsed, but only after the cattle farmer has indicated this by hand or in another manner.

8. An apparatus for dairy farming according to one or several preceding claim(s), characterized in that in the case of feeding places provided with the possibility to identify the relevant animal the visiting or feeding time information is passed on to a farm management computer where further processing of this information can take place whether or not in conjunction with other information.

9. An apparatus for dairy farming according to claim 1, characterized in that use is made of a space situated behind the milking shed or milking robot where feeding places are located which are each equipped with a self-closing feeding fence, an electronic feeding fence automatic consisting of a locking mechanism, a time clock and a switch mechanism which ensures that the self-closing feeding fence locks as soon as the switch is operated, after which the time clock is started and unlocked automatically after the pre-adjusted time, calculated from the moment of closing the fence, has elapsed.

10. An apparatus according to claim 9, characterized in that several electronic feeding fence automatics (EFA's) are connected with one central unit, for instance a feeding unit, through which it is possible to centrally make all the EFA locking mechanisms dead and therefore unlock them.

11. An apparatus according to claim 9, characterized in that each electronic feeding fence automatic (EFA) is provided with one or several keys and a display with which respectively a number of adjusting values can be adjusted and the status of the EFA can be read.
